(19) **Europäisches Patentamt / European Patent Office / Office européen des brevets**

(11) **EP 2 701 429 A1**

(12) **EUROPEAN PATENT APPLICATION**
published in accordance with Art. 153(4) EPC

(43) Date of publication:
**26.02.2014 Bulletin 2014/09**

(51) Int Cl.:
*H04W 28/26* (2009.01)

(21) Application number: **11863946.7**

(22) Date of filing: **22.04.2011**

(86) International application number:
**PCT/CN2011/073189**

(87) International publication number:
**WO 2012/142772 (26.10.2012 Gazette 2012/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventors:
• **ZHANG, Yuantao**
  **Beijing 100025 (CN)**
• **WANG, Yi**
  **Beijing 100025 (CN)**
• **ZHOU, Hua**
  **Beijing 100025 (CN)**
• **WU, Jianming**
  **Beijing 100025 (CN)**

(74) Representative: **Ward, James Norman et al**
**Haseltine Lake LLP**
**Lincoln House, 5th Floor**
**300 High Holborn**
**London WC1V 7JH (GB)**

(54) **METHOD FOR CONFIGURING RESOURCES, METHOD FOR SENDING RESPONSE SIGNAL, BASE STATION AND USER EQUIPMENT**

(57)    A method for configuring resource, method for transmitting response signal, base station and user equipment. The method for configuring resource comprises: configuring a PHICH resource in a data region of a second slot in the data resources scheduled to user equipment in a current subframe. The base station may transmit a response signal via the configured data resource. As a new PHICH resource is configured, the problem of inadequate PHICH resources existed at present is solved.

Fig. 5

**Description**

Technical Field

The present invention relates to a wireless communication technology and, in particular to a method for configuring resource, a method for transmitting response signal, a base station and user equipment.

Background Art

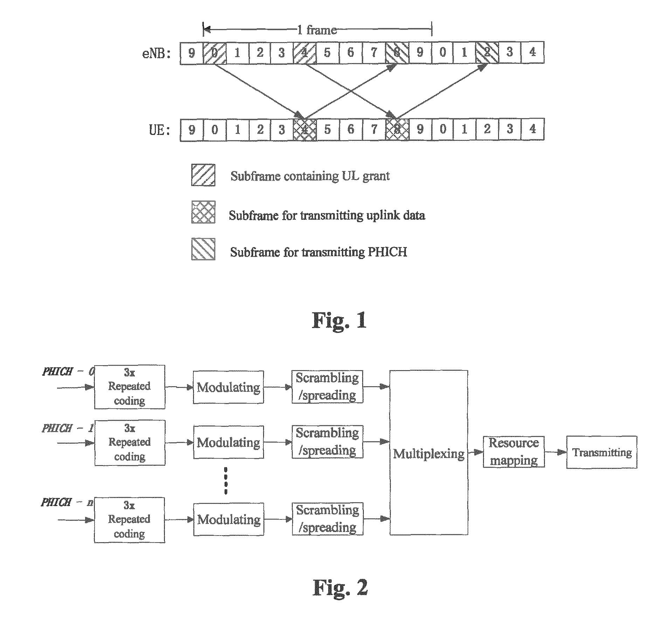

Figure 1 is a time sequence diagram of uplink data transmission scheduled by a base station in a long-term evolution (LTE) system. As shown in Fig. 1, the base station transmits uplink scheduling signaling UL grant in a certain downlink subframe n, a mobile station transmits an uplink data packet in an uplink subframe n+k1 after receiving the UL grant, and the base station transmits a decoding response signal ACK (acknowledgement)/NACK (negative acknowledgement) corresponding to the uplink data packet in a downlink subframe n+k2, respectively denoting correct decoding/ wrong decoding.

In this case, for a frequency division duplexing (FDD) system, k1=k2=4. For example, in Fig. 1, the base station transmits uplink scheduling signaling UL grant in a downlink subframe #0, the mobile station transmits a corresponding uplink data packet in an uplink subframe #4 after receiving the signaling, and the base station transmits a decoding response signal (ACK/NACK) corresponding to the uplink data packet in a downlink subframe #8. The response signal transmitted in the downlink subframe #8 may be transmitted in a physical HARQ indicator channel (PHICH), and may be transmitted in a UL-grant. If the decoding response signal is NACK, the former denotes that the repeat transmission is a non-adaptive repeat transmission, that is, the repeat transmission signal is completely the same as the first transmission signal; and the latter denotes the repeat transmission is an adaptive repeat transmission, that is, information on the bit of the transmitted data, transmission location and transmission format, etc., in repeat transmission may be adjusted.

Figure 2 is a flowchart of transmitting a decoding response signal in a PHICH by a base station. As shown in Fig. 2, at the transmission side, the base station denotes the decoding response signal with a binary, for example, the transmission source bit 1 (=ACK) denotes that the decoding is correct, and source bit 0 (=NACK) denotes that the decoding is wrong; repeatedly encodes the decoding response signal for three times; performs binary phase shift keying (BPSK) modulation to each encoded bit, and then performs scrambling/spreading to them respectively; and transmits the scrambled and spread sequence in the mapped PHICH physical resource. If the transmission sequences of multiple mobile stations are mapped in the same physical resource, they are differentiated by orthogonal spreading sequences.

As shown in Fig. 2, if the sequences after BPSK modulation are $z(0),...,z(2)$, the formula for scrambling/ spreading provided in the existing standards is:

$$d(i) = w\left(i \bmod N_{\mathrm{SF}}^{\mathrm{PHICH}}\right) \cdot \left(1 - 2c(i)\right) \cdot z\left(\lfloor i/N_{\mathrm{SF}}^{\mathrm{PHICH}} \rfloor\right) \quad (1)$$

$$i = 0,...,M_{\mathrm{symb}} - 1$$

$$M_{\mathrm{symb}} = N_{\mathrm{SF}}^{\mathrm{PHICH}} \cdot 3$$

$$N_{\mathrm{SF}}^{\mathrm{PHICH}} = \begin{cases} 4 & \mathrm{normal\,cyclic\,prefix} \\ 2 & \mathrm{extended\,cyclic\,prefix} \end{cases}$$

where, $\left[ w(0) \quad \cdots \quad w(N_{\mathrm{SF}}^{\mathrm{PHICH}} - 1) \right]$ is a spreading sequence, as shown in Fig. 1; $M_{symb}$ is the length of the sequence after scrambling/spreading, which is $M_{symb}$ = 12 for a normal cyclic prefix, and $M_{symb}$ = 6 for an extended cyclic prefix; for a normal cyclic prefix subframe, the length of the spreading sequence is $N_{\mathrm{SF}}^{\mathrm{PHICH}} = 4$, and an extended cyclic prefix subframe, $N_{\text{SF}}^{\text{PHICH}} = 2$, $c(i)$ $c(i)$ being a scrambled sequence, which shall not be described herein in detail.

Table 1

| Sequence index | Orthogonal sequence | |
|---|---|---|
| $n_{\text{PHICH}}^{\text{seq}}$ | Normal cyclic prefix $N_{\text{SF}}^{\text{PHICH}} = 4$ | Extended cyclic prefix $N_{\text{SF}}^{\text{PHICH}} = 2$ |
| 0 | [+1 +1 +1 +1] | [+1 +1] |
| 1 | [+1 -1 +1 -1] | [+1 -1] |
| 2 | [+1 +1 -1 -1] | [+j +j] |
| 3 | [+1 -1 -1 +1] | [+j -j] |
| 4 | [+j +j +j +j] | - |
| 5 | [+j -j +j -j] | - |
| 6 | [+j +j -j -j] | - |
| 7 | [+j -j -j +j] | - |

In Rel. 8/9/10, the number of total available PHICH groups is:

$$N_{\text{PHICH}}^{\text{group}} = \begin{cases} \left\lceil N_g \left( N_{\text{RB}}^{\text{DL}} / 8 \right) \right\rceil & \text{normal cyclic prefix} \\ 2 \cdot \left\lceil N_g \left( N_{\text{RB}}^{\text{DL}} / 8 \right) \right\rceil & \text{extended cyclic prefix} \end{cases} \qquad (2)$$

where, $N_g \in \{1/6, 1/2, 1, 2\}$ is a parameter configured by a high layer, $N_{\text{RB}}^{\text{DL}}$ is the number of total resource blocks (RBs) of the system under the current bandwidth, each PHICH group having 8 available sequences, as shown in Table 2.

Table 2 Cyclic shift index

| Cyclic shift indices in UL-Grant | $n_{DMRS}$ |
|---|---|
| 000 | 0 |
| 001 | 1 |
| 010 | 2 |
| 011 | 3 |
| 100 | 4 |
| 101 | 5 |
| 110 | 6 |
| 111 | 7 |

The resources mapped by the PHICH used by a mobile station are determined by a lowest index of a resource block corresponding to an uplink data and a cyclic shift index of an allocated demodulation reference symbol (DM-RS). Both of them are contained in the UL grant scheduling the uplink data.

Particularly, PHICH resources are determined by a parameter $\left( n_{PHICH}^{group}, n_{PHICH}^{seq} \right)$, where, $n_{PHICH}^{group}$ is the index of the PHICH group, denoting the physical resources actually occupied by the PHICH, and $n_{PHICH}^{seq}$ is the index of an orthogonal sequence in the PHICH group, denoting the sequence resources occupied by the PHICH. The two parameters are defined as follows, taking no uplink multi-antenna transmission into consideration:

$$n_{PHICH}^{group} = (I_{PRB\_RA}^{lowest\_index} + n_{DMRS}) \bmod N_{PHICH}^{group} + I_{PHICH} N_{PHICH}^{group}$$

$$n_{PHICH}^{seq} = (\lfloor I_{PRB\_RA}^{lowest\_index} / N_{PHICH}^{group} \rfloor + n_{DMRS}) \bmod 2N_{SF}^{PHICH} \qquad (3)$$

where, $n_{DMRS}$ comes from the cyclic shift index to which the DM-RS corresponds, as shown in Table 2; $I_{PRB\_RA}^{lowest\_index}$ is the lowest index of a resource block of the uplink data; and $N_{PHICH}^{group}$ is the total number of PHICH groups configured by a high layer, $I_{PHICH} = \begin{cases} 1 \\ 0 \end{cases}$ ; where, for the case where subframes n=4 or 9, for PUSCH transmitted TDD UL/DL configured with 0, $I_{PHICH}$ = 1; and for other cases, $I_{PHICH}$ = 0.

For uplink data having no corresponding UL-grant, such as semi-persistently configured uplink data transmission, the value of $n_{DMRS}$ is fixedly set as 0.

In LTE, a PHICH is generally placed in the first orthogonal frequency division multiplexing (OFDM) symbol; as stated above, PHICHs of multiple mobile stations may be multiplexed in the same physical resource for transmission, which are differentiated by orthogonal sequences. In demodulating the PHICHs, the mobile stations use common reference symbols (CRSs) to perform channel estimation.

However, in the implementation of the present invention, the inventors found that the following defect resides in the prior art: in some scenarios, if the capacity of a traditional PHICH is limited, that is, the PHICH resource mapping manner provided in existing LTE standards cannot place PHICHs of all the mobile stations, or relaying exists, and the relaying cannot receive several former OFDM symbols. Therefore, in these scenarios, the PHICH resources cannot be used to transmit a decoding response signal. No effective solution has been proposed so far to solve the above problem.

It should be noted that the above description of the background art is merely provided for clear and complete explanation of the present invention and for easy understanding by those skilled in the art. And it should not be understood that the above technical solution is known to those skilled in the art as it is described in the background art of the present invention.

Summary of the Invention

An object of the embodiments of the present invention is to provide a method for configuring resource, a method for transmitting response signal, a base station and user equipment. The base station may further transmit a response signal by the PHICH resources configured in a data region, thereby solving the above problem.

According to one aspect of the embodiments of the present invention, there is provided a method for configuring resource, comprising:

configuring a PHICH resource in a data region of a second slot in the data resources scheduled to user equipment in a current subframe.

According to another aspect of the embodiments of the present invention, there is provided a method for transmitting response signal, comprising:

a notifying step: transmitting by a base station to user equipment a region of the PHICH resource for transmitting a response signal after the base station receives the uplink data transmitted by the user equipment, wherein the region comprises a dedicated data region configured by the base station, or a common data region, or a specified region; a receiving step: receiving by the base station the uplink data transmitted by the user equipment; a processing step: processing by the base station the received uplink data, so as to obtain the response signal; and a transmitting step: transmitting by the base station the response signal by using the PHICH resource of the region.

According to a further aspect of the embodiments of the present invention, there is provided a base station, comprising:

a notifying unit to notify user equipment a region of a PHICH resource for transmitting a response signal after the base station receives the uplink data transmitted by the user equipment, wherein the region is a specified region, or a dedicated data region configured by the base station, or a common data region;
a receiving unit to receive the uplink data transmitted by the user equipment;
a processing unit to process the received uplink data, so as to obtain the response signal; and
a transmitting unit to transmit the response signal by using the PHICH resource of the region.

According to still another aspect of the embodiments of the present invention, there is provided a method for transmitting response signal, comprising:

a message detecting step: detecting by user equipment a notifying message transmitted by a base station, the notifying message being used for notifying the user equipment a region of a PHICH resource for transmitting a response signal after the base station receives the uplink data transmitted by the user equipment; wherein the region is a specified region, or a dedicated data region configured by the base station, or a common data region;
a data transmitting step: transmitting by the user equipment to the base station the uplink data; and
a first signal detecting step: detecting by the user equipment the response signal in the region notified by the base station when detecting the notifying message transmitted by the base station.

According to further still another aspect of the embodiments of the present invention, there is provided user equipment, comprising:

a message detecting unit to detect a notifying message transmitted by a base station, the notifying message being used for notifying the user equipment a region of a PHICH resource for transmitting a response signal by the base station after receiving the uplink data transmitted by the user equipment; wherein the region is a specified region, or a dedicated data region configured by the base station, or a common data region;
a data transmitting unit to transmit the uplink data; and
a signal detecting unit to detect the response signal in the region notified by the base station when detecting the notifying message transmitted by the base station.

The advantages of the embodiments of the present invention exist in that a PHICH resource is configured in the data region of a second slot in the data resources scheduled to user equipment in the current subframe, and the base station may transmit a response signal according to the data resource, thereby solving the problem of inadequate PHICH resources existed at present.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:

Figure 1 is a time sequence diagram of the uplink data transmission scheduled in an LTE system;
Figure 2 is a flowchart of transmitting decoding response signal in a PHICH by a base station in an LTE system;
Figure 3 is a schematic diagram of resource configuration of embodiment 1 of the present invention;
Figure 4 is another schematic diagram of resource configuration of embodiment 1 of the present invention;
Figure 5 is a flowchart of the method for transmitting response signal of embodiment 3 of the present invention;
Figure 6 is a schematic structural diagram of a base station of embodiment 4 of the present invention;
Figure 7 is a flowchart of the method for transmitting response signal of embodiment 5 of the present invention;
Figure 8 is a schematic structural diagram of user equipment of embodiment 6 of the present invention;
Figure 9 is a flowchart of the method for transmitting response signal of embodiment 7 of the present invention; and
Figure 10 is a schematic structural diagram of a base station of embodiment 8 of the present invention.

Detailed Description of the Invention

The foregoing and other features of the embodiments of the present invention will become apparent with reference to the drawings and the following description. These embodiments are illustrative only and are not intended to limit the present invention. For easy understanding of the principle and embodiments of the present invention by those skilled in the art, the embodiments of the present invention shall be described taking the method for configuring resource and the method for transmitting response signal that are described below as examples. The embodiments of the present invention are applicable to any systems related to configuring PHICH resources and transmission of response signals.

Embodiment 1

An embodiment of the present invention provides a method for configuring resource. The method comprises: configuring a PHICH resource in the data region of a second slot in the data resources scheduled to user equipment in a current subframe.

It can be seen from the above embodiment that a PHICH resource is configured in the data region of a second slot in the data resources scheduled to user equipment in the current subframe, and the base station may transmit a response signal according to the data resource. As a new PHICH resource is configured, the problem of inadequate PHICH resources existed at present is solved.

In an embodiment, if there exists controlling signaling DL grant scheduling the user equipment to perform downlink data transmission in the data region of the current subframe, the PHICH resource is configured in the physical resource block of the second slot of the physical resource block (PRB) pair at the lowest frequency domain position where the controlling signaling DL grant is located.

In an embodiment, for a semi-persistent scheduling mode, when there exists no controlling signaling DL grant scheduling the user equipment to perform downlink data transmission while there exist downlink data, the PHICH resource is configured in the physical resource block of the second slot of the physical resource block (PRB) pair at the lowest frequency domain position.

In the above embodiment, for the case where the current subframe contains DL grant or data of the user equipment, the PHICH resource may be configured in a part of a region scheduling the data resource division of the user equipment, i.e. the data region of the second slot. This region is referred to herein as a dedicated data region.

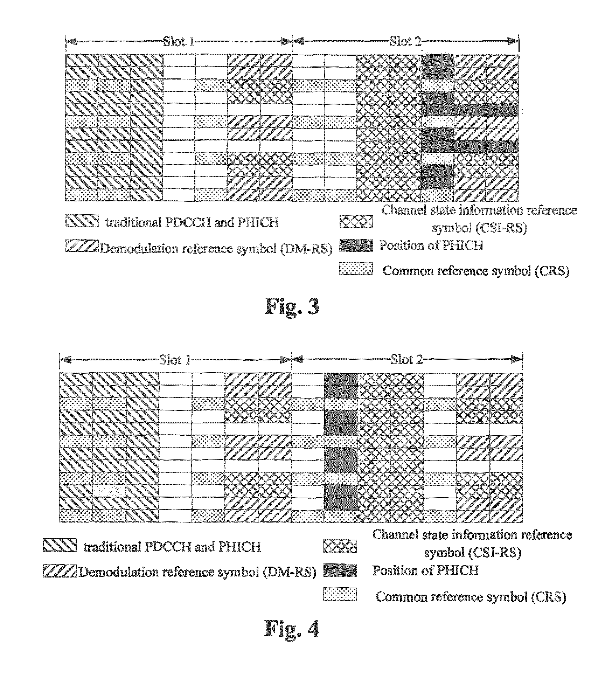

Fig. 3 is a schematic diagram of resource configuration of embodiment 1 of the present invention. As shown in Fig. 3, the PHICH resource is configured around a DM-RS and kept away from positions of all configurable channel state information- reference symbols (CSI-RSs) of the system; wherein, the reason for keeping away from the CSI-RSs is: for different user equipment (mobile stations), the base station may configure parameters of different CSI-RSs, the parameters comprising number of antennas of the CSI-RSs, and resource elements (REs) occupied by the CSI-RSs, etc. If positions of PHICHs are respectively specified for the REs occupied by different CSI-RSs, there will be so many possibilities. From the point of view of standardization, in order to lower the complexity of standardization, the positions where the PHICHs are located should be kept away from all the configurable REs of the CSI-RSs of the system.

Particularly, the PHICH resource may be configured in the REs transmitting data of the fifth to the seventh OFDM symbols of the second slot. In this way, the REs transmitting data of the fifth to the seventh OFDM symbols of the second slot constitute the dedicated data region.

In an embodiment, the base station may semi-persistently configure the PHICH resource shared by multiple pieces of user equipment. Hence, the multiple pieces of user equipment may be enabled to share the dedicated data region by semi-persistently dividing a part of a region by the base station for configuring the PHICH resource. The resources in the region occupied by PHICHs of multiple pieces of user equipment may be interleaved in the shared region, such that the physical resources occupied by each user equipment may be extended to the REs of all the divided resources, thereby bringing extra frequency domain diversity gains. The region shared by multiple pieces of user equipment is herein referred to as a common data region.

Fig. 4 is another schematic diagram of resource configuration of embodiment 1 of the present invention. As shown in Fig. 4, for improving the performance of PHICH demodulation in the common region, the PHICH resource may be configured around a common reference symbol (CRS), that is, the available PHICH resources in the RBs where the PHICH is located are placed around the CRS. As shown in Fig. 4, particularly, the PHICH resource may be configured in the REs transmitting data of the second OFDM symbol of the second slot, and a frequency domain diversity gain may be obtained. As shown in Fig. 4, the REs transmitting data of the second OFDM symbol of the second slot constitute the dedicated data region.

As shown in Figs. 3 and 4, in the existing standards, such as Rel.8/9/10, the configured PHICH resource is located in a specified region (a traditional region), that is, the first slot.

It can be seen from above that the base station uses the PHICH resources configured in three regions to transmit response signals, the three regions being a dedicated data region, a common data region and a specified region, by which PHICH resources may be increased, and the currently existed problem may be solved.

It can be seen from the above embodiment that a PHICH resource is configured in the data region of a second slot in the data resources scheduled to user equipment in the current subframe, and the base station may transmit a response signal according to the data resource, thereby solving the problem of inadequate PHICH resources existed at present.

An embodiment of the present invention further provides an apparatus for configuring resource, as described in embodiment 2 below. As the principle of the apparatus for configuring resource for solving problem is similar to that of the method for configuring resource based on an apparatus for configuring resource, the implementation of the method may be referred to for the implementation of the apparatus for configuring resource, and the repeated parts shall not be described any further.

Embodiment 2

An embodiment of the present invention further provides an apparatus for configuring resource, comprising: a resource configuring unit configured to configure a PHICH resource in the data region of a second slot in the data resources scheduled to user equipment in the current subframe.

It can be seen from the above embodiment that a PHICH resource is configured in the data region of a second slot in the data resources scheduled to user equipment in the current subframe, and the base station may transmit a response signal by the data resource. As a new PHICH resource is configured, the problem of inadequate PHICH resources existed at present is solved.

In an embodiment, as shown in Fig. 3, if there exists controlling signaling DL grant scheduling the user equipment to perform downlink data transmission in the data region of the current subframe, the resource configuring unit is configured to configure the PHICH resource in the physical resource block of the second slot of the PRB pair at the lowest frequency domain position where the controlling signaling is located.

In an embodiment, for a semi-persistent scheduling mode, as shown in Fig. 3, when there exists no controlling signaling DL grant scheduling the user equipment to perform downlink data transmission while there exist downlink data, the resource configuring unit is configured to configure the PHICH resource in the physical resource block of the second slot of the PRB pair at the lowest frequency domain position.

In the above embodiment, the region of the configured PHICH is as described in embodiment 1, which shall not be described herein any further.

Furthermore, in an embodiment, the resource configuring unit is further configured to semi-persistently configure the PHICH resource shared by multiple pieces of user equipment. As shown in Fig. 4, the PHICH resource may be configured by using a part of a region semi-persistently divided in advance for the multiple pieces of user equipment in the system, thereby enabling the multiple pieces of user equipment to share the region, wherein, the region of the configured PHICH is as described in embodiment 1, which shall not be described herein any further.

The apparatus for configuring resource may be a base station.

It can be seen from the above embodiment that a PHICH resource is configured in the data region of a second slot in the data resources scheduled to user equipment in the current subframe, and the base station may transmit a response signal according to the data resource, thereby solving the problem of inadequate PHICH resources existed at present.

Embodiment 3

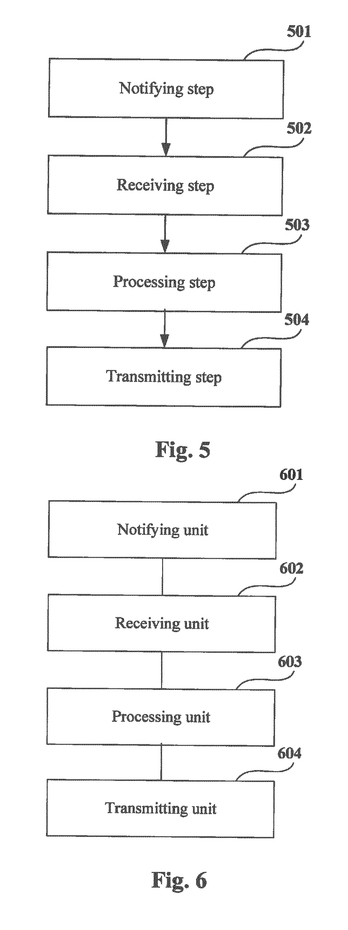

An embodiment of the present invention further provides a method for transmitting response signal. Fig. 5 is a flowchart of the method for transmitting response signal of embodiment 3 of the present invention. As shown in Fig. 5, the method comprises:

step 501: a notifying step: transmitting by a base station to user equipment the region of the PHICH resource for transmitting the response signal after the base station receives the uplink data transmitted by the user equipment, wherein the region is a dedicated data region configured by the base station, or a common data region, or a specified region;

step 502: a receiving step: receiving by the base station the uplink data transmitted by the user equipment;

step 503: a processing step: processing by the base station the received uplink data, so as to obtain the response signal; and

step 503: a transmitting step: transmitting by the base station the response signal by using the PHICH resource of the region.

It can be seen from the above embodiment that the base station may transmit a response signal by the configured PHICH resource, and notify the user equipment of the region where the PHICH resource is located, such that the user equipment may detect the response signal in a corresponding region, so as to determine to transmit new data or retransmit the data. As the base station configures the PHICH resource for transmitting a response signal, the problem of inadequate PHICH resources existed at present is solved.

In this embodiment, the response signal is an ACK/NACK message.

In this embodiment, before notifying step 501, the method further comprises:

a resource configuring step: configuring the dedicated data region or the common data region of the PHICH resource for transmitting the response signal; wherein the dedicated data region or the common data region is located in the data region of the second slot in the data resource scheduled to the user equipment in the current subframe; the dedicated data region refers to a part of the data regions divided from the data resource scheduled to the user equipment when there exists control signaling DL grant for scheduling the user equipment to transmit downlink data in the data regions in the current subframe, or when there exists no control signaling for scheduling the user equipment to transmit downlink data in the current subframe but there exists downlink data; and the common data region refers to a part of the data regions semi-persistently configured by the base station and shared by a plurality of user equipment, the common data region is as shown in Fig.4.

In this case, the detailed mode of configuration, the position of the dedicated data region and the position of the common data region are as described in embodiment 1, the dedicated data region is as shown in Fig. 3, and the common data region is as shown in Fig. 4, which shall not be described herein any further.

In an embodiment, the notifying step 501 may comprise: configuring by base station the region of the PHICH resource for transmitting the response signal, and notifying the configured region to the user equipment, wherein the base station may configure the region of the PHICH resource for transmitting the response signal via high-layer signaling, such as radio resource control (RRC) signaling, and then notifies the user equipment. Thus, the user equipment may detect the response signal in the region notified by the base station after the user equipment transmits the uplink data.

In an embodiment, the notifying step 501 may comprise: notifying by the base station to the user equipment, through the control signaling UL grant for scheduling the uplink data, the region of the PHICH resource for transmitting the response signal, wherein, after the base station notifies the user equipment to transmit the uplink data in a subframe n+k1 through the control signaling UL grant for scheduling the uplink data in a subframe n, the base station transmits the region where the PHICH resource for transmitting the response signal is located in a subframe n+k2.

In this embodiment, the base station notifies the user equipment by using newly-added or reserved one or two bits in the control signaling UL grant for scheduling the uplink data.

In such a case, the notifying step 501 may comprise: determining by the base station the region of the PHICH resource for transmitting the response signal according to whether there exists downlink data transmission in transmitting the response signal; and notifying the determined region to the user equipment, wherein, the step of determining by the base station the region of the PHICH resource for transmitting the response signal according to whether there exists downlink data transmission in transmitting the response signal comprises:

determining that the PHICH resource is located in the dedicated data region if there is downlink data being transmitted; and

determining that the PHICH resource is located in the common data region or the specified region if there is no downlink data being transmitted.

In the above embodiment, when the user equipment learns the region of the PHICH resource for transmitting the response signal, it may detect the response signal in this region, and use a corresponding mode of demodulation to demodulate the signal, wherein, if the PHICH resource for transmitting the response signal is in the dedicated data region, the DM-RS may be used for demodulation, and a mode of precoding with rank=1 may be used; and if the PHICH resource for transmitting the response signal is in the common data region or the specified region, the CRS may be used for demodulation. The detailed processes of the above modes of demodulation are as described in the prior art, which shall not be described herein any further.

In processing step 503, a method similar to the prior art may be used for processing, so as to obtain a decoded response signal, which shall not be described herein any further.

In an embodiment, if the PHICH resource is in the dedicated data region, in transmitting step 504, when the base station transmits more than one response signals by using the PHICH resource in the region, each of the response signals corresponds to a different spreading sequence.

If the base station is needed to transmit multiple response signals, such as multiple ACK/NACK bits, as shown in Fig. 2, these bits are multiplexed in the same physical resource for transmission after being performed encoding, modulation, scrambling/spreading.

In this embodiment, the number of the bits for transmitting the response signal in the PHICH resource is determined according to the number of uplink carriers configured for the user equipment and the transmission modes configured in the uplink carriers. In this embodiment, the number of the bits may be obtained by using the formula below:

$$N_{ack} = \sum_{i=1}^{N_{cc}} n_i^{TB} \qquad (4)$$

where, $N_{ack}$ denotes the total number of bits of the response signals, $n_i^{TB}$ is the number of the transmission blocks in each of the carriers, each of the transmission blocks corresponding to a bit of a response signal, and $N_{cc}$ is the total number of configured carriers.

In this embodiment, the spreading sequence index of the PHICH resource corresponding to each of the response signals (i.e. ACK/NACK) is determined according to the index of the corresponding carrier and the index of the transmission block in the carrier. The spreading sequence index of the PHICH resource corresponding to each of the response signals is obtained by using the formula as follows:

$$n_{ack} = \sum_{i=1}^{n_{cc}} n_i^{TB} + 1 \qquad (5)$$

where, $n_{ack}$ represents the spreading sequence index corresponding to the response signal, and $n_{cc}$ represents the index of the carrier corresponding to the response signal.

Furthermore, the PHICH in the dedicated data region may still use the mode identical to the modulation and coding scheme provided in existing standards, that is, repeated coding is used for three times, and BPSK modulation is performed. Other procedures are similar to the prior art, which shall not be described herein any further.

In this embodiment, when the region where the PHICH resource is present is a common data region, the total number of the PHICH groups available to the common data region may be determined according to the formula as follows:

$$N_{\text{A-PHICH}}^{\text{group}} = \begin{cases} \left\lceil N_g \left( N_{\text{VRB}}^{\text{DL}} / 8 \right) \right\rceil & \text{normal cyclic prefix} \\ 2 \cdot \left\lceil N_g \left( N_{\text{VRB}}^{\text{DL}} / 8 \right) \right\rceil & \text{extended cyclic prefix} \end{cases} \qquad (6)$$

where, $N_{\text{A-PHICH}}^{\text{group}}$ represents the total number of the PHICH groups available for the common data region, $N_{\text{VRB}}^{\text{DL}}$ is the total number of the resource blocks divided from the common data region, and $N_g$ is the parameter configured by a high layer, see the Background Art;

in the common data region, the index of the PHICH groups of the user equipment and the index of the sequences used in the PHICH groups are:

$$n_{PHICH}^{group} = (I_{PRB\_RA}^{lowest\_index} + n_{DMRS}) \bmod N_{A-PHICH}^{group} + I_{PHICH} N_{PHICH}^{group}$$

$$n_{PHICH}^{seq} = (\lfloor I_{PRB\_RA}^{lowest\_index} / N_{A-PHICH}^{group} \rfloor + n_{DMRS}) \bmod 2 N_{SF}^{PHICH}$$

$$(7)$$

where, $n_{PHICH}^{group}$ represents the index of the PHICH groups, $n_{PHICH}^{seq}$ represents the index of the sequences used in the PHICH groups, $n_{DMRS}$ represents the serial number corresponding to the cyclic shift index of DM-RS, and $I_{PRB\_RA}^{lowest\_index}$ represents the index of the resource blocks of the lowest uplink data; and

$$I_{PHICH} = \begin{cases} 1 \\ 0 \end{cases} ;$$

where $I_{PHICH}$ = 1 in a case for TDD UL/DL configuration 0 with PUSCH transmission in subframe n =4 or 9; and $I_{PHICH}$ = 0 in other cases.

It can be seen from the above embodiment that the base station may notify the user equipment of the region where the PHICH resource is located, such that the user equipment may detect the response signal in a corresponding region, so as to determine to transmit new data or retransmit the data. As the base station configures the PHICH resource for transmitting a response signal, the problem of inadequate PHICH resources existed at present is solved.

An embodiment of the present invention further provides a base station, as described in embodiment 4 below. As the principle of the base station for solving problem is similar to that of the method for transmitting response signal based on a base station, the implementation of the method may be referred to for the implementation of the base station, and the repeated parts shall not be described any further.

Embodiment 4

An embodiment of the present invention further provides a base station. Fig. 6 is a schematic structural diagram of the base station of embodiment 4 of the present invention. As shown in Fig. 6, the base station comprises a notifying unit 601, a receiving unit 602, a processing unit 603 and a transmitting unit 604; wherein,
the notifying unit 601 is configured to notify user equipment the region of the PHICH resource for transmitting the response signal after the base station receives the uplink data transmitted by the user equipment, wherein the region is a specified region, or a dedicated data region configured by the base station, or a common data region;
the receiving unit 602 is configured to receive the uplink data transmitted by the user equipment;
the processing unit 603 is configured to process the received uplink data, so as to obtain the response signal; and
the transmitting unit 604 is configured to transmit the response signal by using the PHICH resource of the region.

It can be seen from the above embodiment that the base station may notify the user equipment of the region where the PHICH resource is located, such that the user equipment may detect the response signal in a corresponding region, so as to determine to transmit new data or retransmit the data. As the base station configures the PHICH resource for transmitting a response signal, the problem of inadequate PHICH resources existed at present is solved.

In this embodiment, the processing unit 603 may use a method similar to that in the prior art in processing, which shall not be described herein any further.

In this embodiment, the base station further comprises a resource configuring unit (not shown) configured to configure the dedicated data region or the common data region of the PHICH resource for transmitting the response signal; wherein the dedicated data region or the common data region is located in the data region of the second slot in the data resource scheduled to the user equipment in the current subframe;
the dedicated data region refers to a part of the data regions divided from the data resource scheduled to the user equipment when there exists control signaling for scheduling the user equipment to transmit downlink data in the current subframe, or when there exists no control signaling for scheduling the user equipment to transmit downlink data in the current subframe but there exists downlink data; and
the common data region refers to a part of the data regions semi-persistently configured by the base station and shared by a plurality of pieces of user equipment.

In the above embodiment, the manner of configuring the above regions by the base station and the position of the above data region are as described in embodiment 1, which shall not be described herein any further.

In an embodiment, the notifying unit 601 comprises a region configuring unit and an information notifying unit (not shown); wherein the region configuring unit is configured to configure the region of the PHICH resource for transmitting the response signal, and the information notifying unit is configured to notify the user equipment the region configured by the region configuring unit, and wherein, the region configuring unit may use high-layer signaling RRC in configuration.

In an embodiment, the notifying unit is used to notify the user equipment, through the control signaling UL grant for scheduling the uplink data, the region of the PHICH resource for transmitting the response signal, wherein the detailed manner of notification is as described in embodiment 3, which shall not be described herein any further.

Furthermore, when the PHICH resource is in the dedicated data region, the base station may further comprise a bit number calculating unit (not shown) configured to determine the number of the bits of the PHICH resource for transmitting the response signal according to the number of uplink carriers configured for the user equipment and the transmission modes configured in the uplink carriers. Details are as shown in formula (4).

In an embodiment, if the PHICH resource is in the dedicated data region, when the transmitting unit 603 uses the PHICH resource in the region to transmit more than one response signal, each of the response signals corresponds to different spreading sequences.

If the base station is needed to transmit multiple response signals, such as multiple ACK/NACK bits, in this embodiment, the base station may further comprise a spreading sequence index calculating unit (not shown) configured to determine the spreading sequence index of the PHICH resource corresponding to each of the response signals (i.e. ACK/NACK) according to the index of the corresponding carrier and the index of the transmission block on the carrier. Details are as shown in formula (5).

In this embodiment, when the region where the PHICH resource is located is a common data region, the base station may comprise a group number determining unit (not shown) configured to determine the total number of the PHICH groups available to the common data region.

Furthermore, the base station may comprise an index determining unit (not shown) configured to calculate the index of the PHICH group of the user equipment and the index of the sequence used in the PHICH group by using formula (7).

It can be seen from the above embodiment that the base station may notify the user equipment of the region where the PHICH resource is located, such that the user equipment may detect the response signal in a corresponding region, so as to determine to transmit new data or retransmit the data. As the base station configures the PHICH resource for transmitting a response signal, the problem of inadequate PHICH resources existed at present is solved.

Embodiment 5

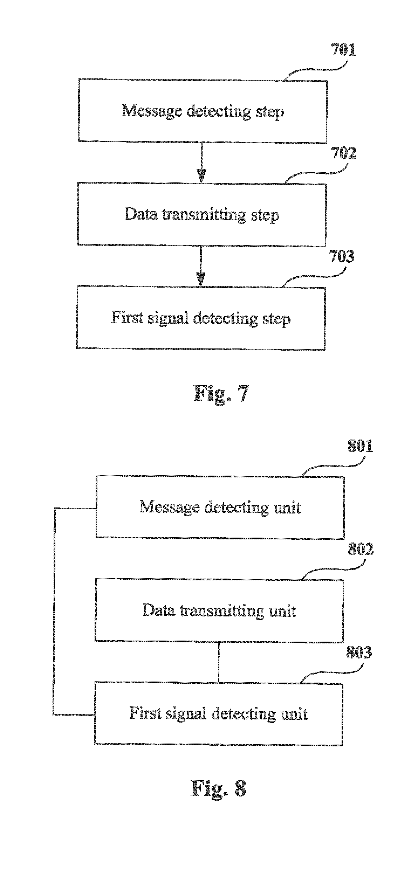

Fig. 7 is a flowchart of the method for transmitting response signal of embodiment 5 of the present invention. As shown in Fig. 7, the method comprises:

step 701: a message detecting step: detecting by user equipment a notifying message transmitted by a base station, the notifying message being used for notifying the user equipment the region of the PHICH resource for transmitting the response signal after the base station receives the uplink data transmitted by the user equipment; wherein the region is a specified region, or a dedicated data region configured by the base station, or a common data region;

step 702: a data transmitting step: transmitting by the user equipment to the base station the uplink data; and

step 703: a first signal detecting step: detecting by the user equipment the response signal in the region notified by the base station when detecting the notifying message transmitted by the base station.

In the above embodiment, when the user equipment learns the region of the PHICH resource for transmitting the response signal, it may detect the response signal in this region, and use a corresponding mode of demodulation to demodulate the signal, wherein, if the PHICH resource for transmitting the response signal is in the dedicated data region, the DM-RS may be used for demodulation, and a mode of precoding with rank=1 may be used; and if the PHICH resource for transmitting the response signal is in the common data region or the specified region, the CRS may be used for demodulation. The detailed processes of the above modes of demodulation are as described in the prior art, which shall not be described herein any further.

In this embodiment, when the base station notifies the user equipment the region of the PHICH resource for transmitting the response signal through the control signaling UL grant for scheduling the uplink data,

in the message detecting step 701, if the user equipment does not detect the control signaling for scheduling the uplink data, the method further comprises:

a second signal detecting step (not shown): detecting by the user equipment the response signal in the physical resource blocks of the second slot corresponding to the control signaling for scheduling the user equipment to transmit downlink data when the user equipment detects that there exists control signaling for scheduling the user equipment to transmit downlink data as the base station transmits the response signal; or

in the message detecting step 701, if the user equipment detects the control signaling for scheduling the uplink data, the method further comprises:

a third signal detecting step (not shown): detecting blindly by the user equipment the response signal in the physical resource blocks of the slots corresponding to all the positions possible to transmit the control signaling for scheduling the user equipment to transmit downlink data when the user equipment does not detect that there exists control signaling for scheduling the user equipment to transmit downlink data as the base station transmits the response signal.

It can be seen from the above embodiment that the base station may notify the user equipment of the region where the PHICH resource is located, and the user equipment may detect the response signal in a corresponding region, so as to determine to transmit new data or retransmit the data.

Embodiment 6

Figure 8 is a schematic structural diagram of user equipment of embodiment 6 of the present invention. As shown in Fig. 8, the user equipment comprises: a message detecting unit 801, a data transmitting unit 802 and a first signal detecting unit 803; wherein,

the message detecting unit 801 is configured to detect a notifying message transmitted by a base station, the notifying message being used for notifying the user equipment the region of the PHICH resource for transmitting the response signal by the base station after receiving the uplink data transmitted by the user equipment; wherein the region is a specified region, or a dedicated data region configured by the base station, or a common data region;

the data transmitting unit 802 is configured to transmit the uplink data to the base station; and

the signal detecting unit 803 is configured to detect the response signal in the region notified by the base station when detecting the notifying message transmitted by the base station.

In this embodiment, when the base station notifies the user equipment of the region where the PHICH resource of the transmitted response signal is located through control signaling UL grant scheduling uplink data,

in the message detecting unit 801, if the control signaling UL grant scheduling uplink data is not detected, the user equipment further comprises:

a second signal detecting unit (not shown) configured to detect the response signal in the physical resource block of the second slot corresponding to the control signaling UL grant scheduling the user equipment to transmit downlink data if it is detected that there exists control signaling UL grant scheduling the user equipment to transmit downlink data when the base station transmits the response signal; or

in the message detecting unit 801, if the control signaling UL grant scheduling uplink data is detected, the user equipment further comprises:

a third signal detecting unit (not shown) configured to blindly detect the response signal in the physical resource block of the slot corresponding to all the positions possibly transmitting the control signaling scheduling the user equipment to transmit downlink data if the user equipment does not detect that there exists control signaling DL grant scheduling the user equipment to transmit downlink data when the base station transmits the response signal.

It can be seen from the above embodiment that the base station may notify the user equipment of the region where the PHICH resource is located, so that the user equipment may detect the response signal in a corresponding region, so as to determine to transmit new data or retransmit the data.

In the above embodiments 1-6, the response signal is transmitted via a PHICH. Following embodiment is described taking that the response signal is transmitted via a UL grant as an example.

Embodiment 7

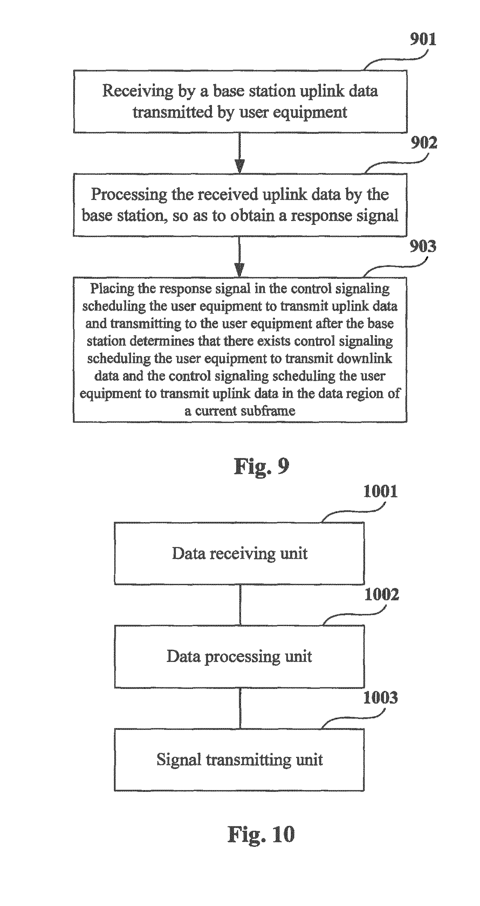

An embodiment of the present invention further provides a method for transmitting response signal. Fig. 9 is a flowchart of the method for transmitting response signal of embodiment 7 of the present invention. As shown in Fig. 9, the method comprises:

step 901: receiving by a base station uplink data transmitted by user equipment;

step 902: processing the received uplink data by the base station, so as to obtain a response signal; and

step 903: placing the response signal in UL grant and transmitting to the user equipment by the base station when the base station determines that there exists control signaling DL grant scheduling the user equipment to transmit downlink data and the control signaling UL grant scheduling the user equipment to transmit uplink data in the data region of a current subframe; wherein,

the DL grant is placed in the first slot (slot1), the UL grant is placed in the second slot (slot2), and the position of the UL grant transmitted by the second slot needs to be kept away from positions of configurable CSI-RSs.

In this case, the reason for keeping away from positions of configurable CSI-RSs is as described above, which shall not be described herein any further.

It can be seen from the above embodiment that when there exist simultaneously the DL grant and the UL grant in the data region of the current subframe, the base station may place the response signal in the UL grant of the second slot of the current subframe, and transmits the response signal in this manner, thereby solving the problem of inadequate PHICH resources to a certain extent.

Embodiment 8

Fig. 10 is a schematic structural diagram of a base station of embodiment 8 of the present invention. As shown in Fig. 10, the base station comprises: a data receiving unit 1001, a data processing unit 1002 and a signal transmitting unit 1003; wherein,

the data receiving unit 1001 is configured to receive uplink data transmitted by user equipment;

the data processing unit 1002 is configured to process the received uplink data, so as to obtain a response signal; and

the signal transmitting unit 1003 is configured to place the response signal in control signaling UL grant scheduling the user equipment to transmit uplink data and transmit to the user equipment when there exists control signaling DL grant scheduling the user equipment to transmit downlink data and the control signaling UL grant scheduling the user equipment to transmit uplink data in the data region of a current subframe; wherein,

the control signaling DL grant scheduling the user equipment to transmit downlink data is placed in the first slot of the current subframe, and the UL grant scheduling the user equipment to transmit uplink data is placed in the second slot of the current subframe.

And in this embodiment, the position of the UL grant transmitted by the second slot needs to be kept away from positions of configurable CSI-RSs.

It can be seen from the above embodiment that when there exist simultaneously the DL grant and the UL grant in the data region of the current subframe, the base station may place the response signal in the UL grant of the second slot of the current subframe, and transmits the response signal in this manner, thereby solving the problem of inadequate PHICH resources to a certain extent.

An embodiment of the present invention further provides a computer-readable program, wherein when the program is executed in an apparatus for configuring resource, the program enables the computer to carry out the method for configuring resource as described in embodiment 1 in the apparatus for configuring resource.

An embodiment of the present invention further provides a storage medium in which a computer-readable program is stored, wherein the computer-readable program enables the computer to carry out the method for configuring resource as described in embodiment 1 in an apparatus for configuring resource.

An embodiment of the present invention further provides a computer-readable program, wherein when the program is executed in a base station, the program enables the computer to carry out the method for transmitting response signal as described in embodiment 3 in the base station.

An embodiment of the present invention further provides a storage medium in which a computer-readable program is stored, wherein the computer-readable program enables the computer to carry out the method for transmitting response signal as described in embodiment 3 in a base station.

An embodiment of the present invention further provides a computer-readable program, wherein when the program is executed in user equipment, the program enables the computer to carry out the method for transmitting response signal as described in embodiment 5 in the user equipment.

An embodiment of the present invention further provides a storage medium in which a computer-readable program is stored, wherein the computer-readable program enables the computer to carry out the method for transmitting response signal as described in embodiment 5 in user equipment.

An embodiment of the present invention further provides a computer-readable program, wherein when the program is executed in a base station, the program enables the computer to carry out the method for transmitting response signal as described in embodiment 7 in the base station.

An embodiment of the present invention further provides a storage medium in which a computer-readable program is stored, wherein the computer-readable program enables the computer to carry out the method for transmitting response signal as described in embodiment 7 in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

**Claims**

1. A method for configuring resource, comprising:

   configuring a PHICH resource in a data region of a second slot in the data resources scheduled to user equipment in a current subframe.

2. The method according to claim 1, wherein when there exists control signaling for scheduling the user equipment to transmit downlink data in the data region of the current subframe, the PHICH resource is configured in the physical resource blocks of the second slot of the physical resource block pair at the lowest frequency domain where the control signaling is located.

3. The method according to claim 1, wherein when there exists no control signaling for scheduling the user equipment to transmit downlink data in the current subframe but there exists downlink data, the PHICH resource is configured in the physical resource blocks of the second slot of the physical resource block pair at the lowest frequency domain.

4. The method according to claim 2 or 3, wherein the PHICH resource is configured around a demodulation reference signal, excluding the positions of all the channel status information reference signals that are configurable by a system.

5. The method according to claim 4, wherein the PHICH resource is configured in the resource elements of the transmission data of the fifth to seventh OFDM symbols in the second slot.

6. The method according to claim 1, wherein a base station semi-persistently configures the PHICH resource shared by a plurality of user equipment.

7. The method according to claim 1, wherein the PHICH resource is configured around a common reference signal.

8. The method according to claim 6, wherein the PHICH resource is configured in the resource elements of the transmission data of the second OFDM symbol in the second slot.

9. A method for transmitting response signal, comprising:

   a notifying step: transmitting by a base station to user equipment a region of a PHICH resource for transmitting a response signal after the base station receives the uplink data transmitted by the user equipment, wherein the region comprises a dedicated data region configured by the base station, or a common data region, or a specified region;
   a receiving step: receiving by the base station the uplink data transmitted by the user equipment;
   a processing step: processing by the base station the received uplink data, so as to obtain the response signal; and
   a transmitting step: transmitting by the base station the response signal by using the PHICH resource of the region.

10. The method according to claim 9, wherein before the notifying step, the method further comprises:

    a resource configuring step: configuring the dedicated data region or the common data region of the PHICH resource for transmitting the response signal; wherein the dedicated data region or the common data region is located in the data region of the second slot in the data resource scheduled to the user equipment in a current subframe;

the dedicated data region refers to a part of the data regions divided from the data resource scheduled to the user equipment when there exists control signaling for scheduling the user equipment to transmit downlink data in the current subframe, or when there exists no control signaling for scheduling the user equipment to transmit downlink data in the current subframe but there exists downlink data; and

the common data region refers to a part of the data regions semi-persistently configured by the base station and shared by a plurality of user equipment.

11. The method according to claim 9, wherein the notifying step comprises:

configuring by the base station the region of the PHICH resource for transmitting the response signal, and notifying the configured region to the user equipment.

12. The method according to claim 9, wherein the notifying step comprises:

notifying by the base station to the user equipment, through the control signaling for scheduling the uplink data, the region of the PHICH resource for transmitting the response signal.

13. The method according to claim 12, wherein the base station notifies the user equipment by using newly-added or reserved one or two bits in the control signaling for scheduling the uplink data.

14. The method according to claim 12, wherein the notifying step comprises:

determining by the base station the region of the PHICH resource for transmitting the response signal according to whether there exists downlink data transmission in transmitting the response signal; and
notifying the determined region to the user equipment.

15. The method according to claim 14, wherein the step of determining by the base station the region of the PHICH resource for transmitting the response signal according to whether there exists downlink data transmission in transmitting the response signal comprises:

determining that the PHICH resource is located in the dedicated data region if there is downlink data being transmitted; and
determining that the PHICH resource is located in the common data region or the specified region if there is no downlink data being transmitted.

16. The method according to claim 9, wherein in the dedicated data region and in the transmitting step, when the base station transmits more than one response signals by using the PHICH resource in the region, each of the response signals corresponds to a different spreading sequence.

17. The method according to claim 16, wherein the spreading sequence index of the PHICH resource corresponding to each of the response signals is determined according to the index of the corresponding carrier and the index of the transmission block on the carrier.

18. The method according to claim 17, wherein the spreading sequence index of the PHICH resource corresponding to each of the response signals is obtained by using the formula as follows:

$$n_{ack} = \sum_{i=1}^{n_{cc}} n_i^{TB} + 1$$

where, $n_{ack}$ represents the spreading sequence index corresponding to the response signal, and $n_{cc}$ represents the index of the carrier corresponding to the response signal.

19. The method according to claim 9, wherein the number of the bits in the PHICH resource for transmitting the response signal is determined according to the number of uplink carriers configured for the user equipment and the transmission mode configured in the uplink carriers

20. The method according to claim 19, wherein the number of the bits of the response signal is obtained by using the formula as follows:

$$N_{ack} = \sum_{i=1}^{N_{cc}} n_i^{TB}$$

where, $N_{ack}$ is the total number of bits of the response signals, $n_i^{TB}$ is the number of the transmission blocks in each of the carriers, each of the transmission blocks corresponding to a bit of a response signal, and $N_{cc}$ is the total number of configured carriers.

21. The method according to claim 9, wherein when the region where the PHICH resource is present is a common data region, the total number of the PHICH groups available to the common data region is:

$$N_{\text{A-PHICH}}^{\text{group}} = \begin{cases} \left\lceil N_g \left( N_{\text{VRB}}^{\text{DL}} / 8 \right) \right\rceil & \text{normal cyclic prefix} \\ 2 \cdot \left\lceil N_g \left( N_{\text{VRB}}^{\text{DL}} / 8 \right) \right\rceil & \text{extended cyclic prefix} \end{cases}$$

where, $N_{\text{A-PHICH}}^{\text{group}}$ represents the total number of the PHICH groups available for the common data region, $N_{\text{VRB}}^{\text{DL}}$ is the total number of the resource blocks divided from the common data region, and $N_g$ is the parameter configured by a high layer; and
in the common data region, the index of the PHICH groups of the user equipment and the index of the sequences used in the PHICH groups are:

$$n_{PHICH}^{group} = (I_{PRB\_RA}^{lowest\_index} + n_{DMRS}) \bmod N_{A-PHICH}^{group} + I_{PHICH} N_{PHICH}^{group}$$

$$n_{PHICH}^{seq} = \left( \left\lfloor I_{PRB\_RA}^{lowest\_index} / N_{A-PHICH}^{group} \right\rfloor + n_{DMRS} \right) \bmod 2 N_{SF}^{PHICH}$$

where, $n_{DMRS}$ represents the serial number corresponding to the cyclic shift index of DM-RS, $I_{PRB\_RA}^{lowest\_index}$ represents the index of the resource blocks of the lowest uplink data, and $N_{SF}^{PHICH}$ represents the degree of the spreading sequence; and

$$I_{PHICH} = \begin{cases} 1 \\ 0 \end{cases} \quad ;$$

where $I_{PHCH} = 1$ in a case for TDD UL/DL configuration 0 with PUSCH transmission in subframe n =4 or 9; and $I_{PHICH} = 0$ in other cases.

22. A base station, comprising:

a notifying unit to notify user equipment a region of a PHICH resource for transmitting a response signal after the base station receives the uplink data transmitted by the user equipment, wherein the region is a specified region, or a dedicated data region configured by the base station, or a common data region;
a receiving unit to receive the uplink data transmitted by the user equipment;

a processing unit to process the received uplink data, so as to obtain the response signal; and
a transmitting unit to transmit the response signal by using the PHICH resource of the region.

**23.** The base station according to claim 22, wherein the base station further comprises:

a resource configuring unit to configure the dedicated data region or the common data region of the PHICH resource for transmitting the response signal; wherein the dedicated data region or the common data region is located in the data region of the second slot in the data resource scheduled to the user equipment in a current subframe;
the dedicated data region refers to a part of the data regions divided from the data resource scheduled to the user equipment when there exists control signaling for scheduling the user equipment to transmit downlink data in the current subframe, or when there exists no control signaling for scheduling the user equipment to transmit downlink data in the current subframe but there exists downlink data; and
the common data region refers to a part of the data regions semi-persistently configured by the base station and shared by a plurality of pieces of user equipment.

**24.** The base station according to claim 22, wherein the notifying unit comprises:

a region configuring unit to configure the region of the PHICH resource for transmitting the response signal; and
an information notifying unit to notify the user equipment the region configured by the region configuring unit.

**25.** The base station according to claim 22, wherein the notifying unit is used to notify the user equipment, through the control signaling for scheduling the uplink data, the region of the PHICH resource for transmitting the response signal.

**26.** A method for transmitting response signal, comprising:

a message detecting step: detecting by user equipment a notifying message transmitted by a base station, the notifying message being used for notifying the user equipment a region of a PHICH resource for transmitting the response signal after the base station receives uplink data transmitted by the user equipment; wherein the region is a specified region, or a dedicated data region configured by the base station, or a common data region;
a data transmitting step: transmitting by the user equipment to the base station the uplink data; and
a first signal detecting step: detecting by the user equipment the response signal in the region notified by the base station when detecting the notifying message transmitted by the base station.

**27.** The method according to claim 26, wherein when the base station notifies the user equipment the region of the PHICH resource for transmitting the response signal through the control signaling for scheduling the uplink data, in the message detecting step, if the user equipment does not detect the control signaling for scheduling the uplink data, the method further comprises:

a second signal detecting step: detecting by the user equipment the response signal in the physical resource blocks of the second slot corresponding to the control signaling for scheduling the user equipment to transmit downlink data when the user equipment detects that there exists control signaling for scheduling the user equipment to transmit downlink data as the base station transmits the response signal; or
in the message detecting step, if the user equipment detects the control signaling for scheduling the uplink data, the method further comprises:

a third signal detecting step: detecting blindly by the user equipment the response signal in the physical resource blocks of the slots corresponding to all the positions possible to transmit the control signaling for scheduling the user equipment to transmit downlink data when the user equipment does not detect that there exists control signaling for scheduling the user equipment to transmit downlink data as the base station transmits the response signal.

**28.** User equipment, comprising:

a message detecting unit to detect a notifying message transmitted by a base station, the notifying message being used for notifying the user equipment a region of a PHICH resource for transmitting a response signal by the base station after receiving the uplink data transmitted by the user equipment; wherein the region is a specified region, or a dedicated data region configured by the base station, or a common data region;

a data transmitting unit to transmit the uplink data; and
a signal detecting unit to detect the response signal in the region notified by the base station when detecting the notifying message transmitted by the base station.

Fig. 1

Fig. 2

**Fig. 3**

**Fig. 4**

501

```
┌─────────────────────────────┐
│       Notifying step        │
└─────────────────────────────┘
              │
              ▼
```

502

```
┌─────────────────────────────┐
│       Receiving step        │
└─────────────────────────────┘
              │
              ▼
```

503

```
┌─────────────────────────────┐
│       Processing step       │
└─────────────────────────────┘
              │
              ▼
```

504

```
┌─────────────────────────────┐
│      Transmitting step      │
└─────────────────────────────┘
```

**Fig. 5**

601

```
┌─────────────────────────────┐
│        Notifying unit       │
└─────────────────────────────┘
              │
```

602

```
┌─────────────────────────────┐
│        Receiving unit       │
└─────────────────────────────┘
              │
```

603

```
┌─────────────────────────────┐
│        Processing unit      │
└─────────────────────────────┘
              │
```

604

```
┌─────────────────────────────┐
│       Transmitting unit     │
└─────────────────────────────┘
```

**Fig. 6**

701

Message detecting step

702

Data transmitting step

703

First signal detecting step

**Fig. 7**

801

Message detecting unit

802

Data transmitting unit

803

First signal detecting unit

**Fig. 8**

901

Receiving by a base station uplink data transmitted by user equipment

902

Processing the received uplink data by the base station, so as to obtain a response signal

903

Placing the response signal in the control signaling scheduling the user equipment to transmit uplink data and transmitting to the user equipment after the base station determines that there exists control signaling scheduling the user equipment to transmit downlink data and the control signaling scheduling the user equipment to transmit uplink data in the data region of a current subframe

**Fig. 9**

1001

Data receiving unit

1002

Data processing unit

1003

Signal transmitting unit

**Fig. 10**

# INTERNATIONAL SEARCH REPORT

| | International application No. |
|---|---|
| | PCT/CN2011/073189 |

**A. CLASSIFICATION OF SUBJECT MATTER**

H04W28/26(2009.01)i

According to International Patent Classification (IPC) or to both national classification and IPC

**B. FIELDS SEARCHED**

Minimum documentation searched (classification system followed by classification symbols)

IPC: H04W; H04L; H04J; H04B

Documentation searched other than minimum documentation to the extent that such documents are included in the fields searched

Electronic data base consulted during the international search (name of data base and, where practicable, search terms used)

VEN,3GPP,CNABS,CNKI: PHICH, resource, allocate, configure, reserve, base station, eNB, UE, user equipment, mobile, response, ACK, NACK，notify, notification, uplink

**C. DOCUMENTS CONSIDERED TO BE RELEVANT**

| Category* | Citation of document, with indication, where appropriate, of the relevant passages | Relevant to claim No. |
|---|---|---|
| X | CN101938793A(HUAWEI TECHNOLOGIES CO LTD)05 Jan. 2011(05.01.2011) description paragraphs 0003, 0004, 0037, 0064, 0071 | 1, 6 |
| Y | See above | 9, 11-13, 22, 24-25 |
| X | CN101908955A(DATANG MOBILE COMMUNICATION EQUIP CO LTD)08 Dec. 2010(08.12.2010) description paragraphs 0042-0044, 0054-0070, 0129-0133, 0147-0152, figures 12, 14 and 15 | 26, 28 |
| Y | See above | 9, 11-13, 22, 24-25 |
| A | WO2010103964A1(NTT DOCOMO INC)16 Sep. 2010(16.09.2010) the whole document | 1-28 |
| A | CN101939941A(SAMSUNG ELECTRONICS CO LTD)05 Jan. 2011(05.01.2011) the whole document | 1-28 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 30 Nov.2011(30.11.2011) | **16 Feb. 2012 (16.02.2012)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI, Yanling Telephone No. (86-10)62411467 |
|---|---|

Form PCT/ISA /210 (second sheet) (July 2009)

## INTERNATIONAL SEARCH REPORT

| International application No. |
|---|
| PCT/CN2011/073189 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The first group of inventions: independent claim 1
The second group of inventions: independent claims (9, 22, 26, 28)
The same or corresponding technical feature among the independent claim 1 and independent claims (9, 22, 26, 28) is "PHICH resources", but the same or corresponding technical feature is disclosed in D1 (CN101938793A). Therefore, there is no same or corresponding special technical feature that makes a contribution over the prior art among the two inventions. The application, hence does not meet the requirements of unity of invention as defined in Rule 13.1 PCT.

1. ☐ As all required additional search fees were timely paid by the applicant, this international search report covers all searchable claims.

2. ☒ As all searchable claims could be searched without effort justifying an additional fees, this Authority did not invite payment of additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA /210 (continuation of first sheet (2)) (July 2009)

## INTERNATIONAL SEARCH REPORT
### Information on patent family members

International application No.

PCT/CN2011/073189

| Patent Documents referred in the Report | Publication Date | Patent Family | Publication Date |
|---|---|---|---|
| CN101938793A | 05.01.2011 | NONE | |
| CN101908955A | 08.12.2010 | WO2010139217A1 | 09.12.2010 |
| WO2010103964A1 | 16.09.2010 | JP2010212855A | 24.09.2010 |
| CN101939941A | 05.01.2011 | WO2009099306A1 | 13.08.2009 |
| | | KR20100116210A | 29.10.2010 |
| | | EP2088709A2 | 12.08.2009 |
| | | US2009201863A1 | 13.08.2009 |
| | | JP2011514732W | 06.05.2011 |

Form PCT/ISA /210 (patent family annex) (July 2009)